# EUROPÄISCHE PATENTANMELDUNG

(11) **EP 2 037 682 A2**
(43) Veröffentlichungstag der Anmeldung: **18.03.2009**
(21) Anmeldenummer: 08010564.6
(22) Anmeldetag: 11.06.2008
(51) Int. Cl.: H04N 7/18

(54) **Türbeschlag**

(30) Priorität: 14.09.2007 DE 102007043973
(71) Anmelder: Primion Technology AG, 72510 Stetten a.k.M. (DE)
(72) Erfinder: Steigmayer, Georg, 72336 Balingen (DE)
(74) Vertreter: Daub, Thomas

(57) **Zusammenfassung**

Die Erfindung geht aus von einem Türbeschlag.
Es wird vorgeschlagen, dass der Türbeschlag eine Kameravorrichtung (11) umfasst.

## Beschreibung

### Stand der Technik

Die Erfindung geht aus von einem Türbeschlag.

Es sind bereits Türbeschläge, insbesondere für eine Außenseite einer Tür und eine Innenseite der Tür, bekannt.

Der Erfindung liegt insbesondere die Aufgabe zugrunde, einen Türbeschlag bereitzustellen, mit dem eine Zugangskontrollfunktion realisiert werden kann. Sie wird gemäß der Erfindung durch die Merkmale des Hauptanspruchs und dem unabhängigen Nebenanspruch gelöst. Weitere Ausgestaltungen ergeben sich aus den Unteransprüchen.

### Vorteile der Erfindung

Die Erfindung geht aus von einem Türbeschlag, insbesondere für eine Außenseite einer Tür.

Es wird vorgeschlagen, dass der Türbeschlag eine Kameravorrichtung umfasst. Unter einer "Außenseite" der Tür soll insbesondere eine Seite der Tür verstanden werden, die einem Raum oder einem Gebäude abgewandt ist und von der aus ein Zugang zu dem Raum oder Gebäude kontrolliert werden soll. Durch eine Kameravorrichtung kann eine einfache und effiziente Zugangskontrollvorrichtung realisiert werden. Insbesondere kann mittels eines Türbeschlags mit einer Kameravorrichtung ein einfach montierbarer elektronischer Türspion realisiert werden, indem einfach der Türbeschlag getauscht oder montiert wird.

Vorteilhafterweise ist die Kameravorrichtung als ein Modul ausgebildet. Unter einem "Modul" soll insbesondere eine abgeschlossene Baugruppe von Einzelteilen verstanden werden. Dadurch kann die Kameravorrichtung einfach an den Türbeschlag angebracht werden und bei einem Defekt einfach ausgetauscht werden. Vorzugsweise bildet das Modul einen Endbereich des Türbeschlags und schließt einen Grundkörper des Türbeschlags nach oben ab.

Weiter wird vorgeschlagen, dass die Kameravorrichtung eine Aufnahmerichtung aufweist, die mit einer Haupterstreckungsrichtung einen Winkel zwischen 30° und 60° einschließt, wobei ein Winkel zwischen 40° und 50° vorteilhaft und ein Winkel von ca. 45° besonders vorteilhaft ist. Unter einer Aufnahmerichtung soll dabei eine Richtung verstanden werden, in der ausgehend von der Kameravorrichtung ein Mittelpunkt eines Blickfeldes der Kameravorrichtung liegt. Unter einer "Haupterstreckungsrichtung" des Türbeschlags soll dabei insbesondere eine Richtung des Türbeschlags verstanden werden, die sich parallel zu einer Profilrichtung des Grundkörpers, der vorteilhafterweise in einem Strangpressverfahren hergestellt wird, erstreckt. Insbesondere ist die Haupterstreckungsrichtung des Türbeschlags parallel zu einer Montagefläche des Türbeschlags, mittels der der Türbeschlag auf der Tür montiert werden kann, und parallel zu einer Haupterstreckungsrichtung der Tür. Durch eine erfindungsgemäße Ausgestaltung kann eine vor der Tür stehende Person vorteilhaft vom Blickfeld der Kameravorrichtung erfasst werden. Vorzugsweise ist die Aufnahmerichtung zwischen 30° und 60° einstellbar.

Ferner wird vorgeschlagen, dass die Kameravorrichtung ein Weitwinkelobjektiv aufweist. Mittels eines Weitwinkelobjektives kann ein vorteilhaft großes Blickfeld realisiert werden.

Vorteilhafterweise weist die Kameravorrichtung eine Zoomvorrichtung auf. Dadurch können Objekte und insbesondere Personen innerhalb des Blickfeldes der Kameravorrichtung vorteilhaft vergrößert werden.

In einer weiteren Ausgestaltung der Erfindung wird vorgeschlagen, dass der Türbeschlag eine Datenübertragungsvorrichtung aufweist, die dazu vorgesehen ist, Daten der Kamera weiterzuleiten. Mittels einer Datenübertragungsvorrichtung können die Daten einfach an eine geeignete Vorrichtung, wie beispielsweise ein Display, weitergeleitet werden. Neben den Daten der Kameravorrichtung kann die Datenübertragungsvorrichtung grundsätzlich auch mit weiteren Einheiten des Türbeschlages kommunizieren, wie beispielsweise mit einer Schließvorrichtung, die dazu vorgesehen ist, die Tür zu verschließen, wobei prinzipiell die Datenübertragungsvorrichtung sowohl Daten empfangen als auch senden kann.

Umfasst die Datenübertragungsvorrichtung eine Funkvorrichtung, die dazu vorgesehen ist, die Daten drahtlos zu übermitteln, können die Daten ohne einen zusätzlichen Installationsaufwand auch über größere Entfernungen übermittelt werden. Vorteilhafterweise umfasst die Datenübertragungsvorrichtung insbesondere für die Funkvorrichtung eine Verschlüsselungsvorrichtung, die dazu vorgesehen ist, die übertragenen Daten zu verschlüsseln, um ein unerlaubtes Mitschneiden der Daten zu verhindern.

Ferner wird vorgeschlagen, dass der Türbeschlag eine Einund/oder Ausschaltvorrichtung aufweist, die dazu vorgesehen ist, die Kameravorrichtung zu aktivieren. Dadurch kann ein Energiesparmodus realisiert werden, in dem die Kameravorrichtung deaktiviert ist, wodurch sich eine Betriebsdauer einer Energieversorgungsvorrichtung erhöht. Eine Ein- und/oder Ausschaltvorrichtung kann beispielsweise einen über einen Taster geäußerten Benutzerwunsch berücksichtigen. Außerdem kann die Ein- und/oder Ausschaltvorrichtung an die Datenübermittlungsvorrichtung angebunden sein, von der sie einen entsprechenden Einschaltimpuls erhält bzw. an die sie beim Einschalten einen entsprechenden Schaltimpuls sendet. Besonders vorteilhaft ist eine automatisierte Ein- und/oder Ausschaltvorrichtung, die beispielsweise mittels eines Bewegungsmelders eine Person, die auf der Türseite steht, erkennt und daraufhin die Kameravorrichtung aktiviert. Vorteilhafterweise aktiviert die Einund/oder Ausschaltvorrichtung die Kamera für einen definierten Zeitraum, beispielsweise bis die Tür geöffnet wird oder bis eine definierte Zeitspanne verstrichen ist, und deaktiviert die Kameravorrichtung anschließend wieder.

Weiter wird vorgeschlagen, dass der Türbeschlag eine Zugangsfreigabevorrichtung umfasst, die dazu vorgesehen ist, einen Zugang zu einem Raum freizugeben. Dadurch kann einfach eine komplette Einheit, die einen Raum zugangsberechtigten Personen freigibt, bereitgestellt werden. Eine Zugangsfreigabevorrichtung kann beispielsweise durch eine Code-Eingabe oder durch einen Schlüssel, der mechanisch oder elektrisch ausgebildet ist, realisiert werden. Auch eine Zugangsfreigabevorrichtung mit einem Fingerabdrucksensor ist denkbar.

Vorteilhafterweise umfasst der Türbeschlag zusätzlich eine Beleuchtungsvorrichtung, die dazu vorgesehen ist, ein Blickfeld der Kameravorrichtung auszuleuchten. Mittels einer Beleuchtungsvorrichtung kann eine Ausleuchtung des Blickfeldes verbessert werden. Insbesondere eine Infrarotbeleuchtung beispielsweise mittels einer Infrarotdiode ist vorteilhaft, da eine solche Beleuchtung vom menschlichen Auge nicht wahrgenommen wird.

Ferner wird ein Türbeschlag, insbesondere für eine Innenseite einer Tür und insbesondere in Verbindung mit einem Türbeschlag mit einer Kameravorrichtung, vorgeschlagen, der ein Display umfasst. Dadurch kann ein von einer Kameravorrichtung an einer Türaußenseite aufgenommenes Bild an der Innenseite dargestellt werden, wodurch sich ein elektronischer Türspion einfach realisieren lässt. Grundsätzlich können aber auch andere Daten, wie beispielsweise Informationen für einen Hotelgast, auf dem Display dargestellt werden.

Vorteilhafterweise ist das Display als ein Modul ausgebildet. Dadurch kann das Display einfach an den Türbeschlag angebracht werden und bei einem Defekt einfach ausgetauscht werden.

Es wird weiter vorgeschlagen, dass das Display als ein organisches Display ausgebildet ist, wobei unter einem organischen Display insbesondere ein sogenanntes OLED-Display verstanden werden soll. OLED-Display's sind günstig herzustellen und weisen einen geringen Strombedarf auf. Alternativ kann das Display auch als ein LCD-Display mit einer Hintergrundbeleuchtung ausgeführt sein.

Ferner wird vorgeschlagen, dass das Display eine Normalrichtung aufweist, die mit einer Haupterstreckungsrichtung einen Winkel zwischen 30° und 60° einschließt, wobei ein Winkel zwischen 40° und 50° vorteilhaft und ein Winkel von ca. 45° besonders vorteilhaft ist. Unter einer "Normalrichtung" soll insbesondere eine Richtung senkrecht zu einer Oberfläche bzw. einer Anzeigefläche des Displays verstanden werden. Vorzugsweise ist die Normalrichtung zwischen 30° und 60° einstellbar.

In einer weiteren erfindungsgemäßen Ausgestaltung wird vorgeschlagen, dass der Türbeschlag eine Datenübertragungsvorrichtung aufweist, die dazu vorgesehen ist, empfangene Daten an das Display weiterzuleiten. Mittels einer Datenübertragungsvorrichtung können die Daten, die beispielsweise von einer Kamera empfangen wurden, einfach an das Display weitergeleitet werden. Neben den Daten für das Display kann die Datenübertragungsvorrichtung grundsätzlich auch mit weiteren Einheiten des Türbeschlages kommunizieren, wie beispielsweise mit einer Schließvorrichtung, die dazu vorgesehen ist, die Tür zu verschließen, wobei prinzipiell die Datenübertragungsvorrichtung sowohl Daten empfangen als auch senden kann.

Vorteilhafterweise weist der Türbeschlag eine Ein- und/oder Ausschaltvorrichtung auf, die dazu vorgesehen ist, das Display zu aktivieren. Dadurch kann ein Energiesparmodus realisiert werden, in dem das Display deaktiviert ist, wodurch sich eine Betriebsdauer einer Energieversorgungsvorrichtung des Türbeschlags erhöht. Eine Ein- und/oder Ausschaltvorrichtung kann beispielsweise einen über einen Taster geäußerten Benutzerwunsch berücksichtigen. Außerdem kann die Einund/oder Ausschaltvorrichtung an die Datenübermittlungsvorrichtung angebunden sein, von der sie einen entsprechenden Einschaltimpuls erhält bzw. an die sie beim Einschalten einen entsprechenden Schaltimpuls sendet. Besonders vorteilhaft ist eine Ein- und/oder Ausschaltvorrichtung, die eine Betätigung eines Drückers sensiert, wie beispielsweise ein Antippen. Vorteilhafterweise aktiviert die Ein- und/oder Ausschaltvorrichtung das Display für einen definierten Zeitraum, beispielsweise bis die Tür geöffnet wird oder bis eine definierte Zeitspanne verstrichen ist, und deaktiviert das Display anschließend wieder.

Vorzugsweise sind der Türbeschlag, der insbesondere einen Innentürbeschlag bildet, und der Türbeschlag, der insbesondere einen Außentürbeschlag bildet, zumindest teilweise einteilig ausgeführt. Insbesondere ist es vorteilhaft, wenn die Türbeschläge zumindest teilweise eine gemeinsame Datenübertragungsvorrichtung, wie insbesondere eine gemeinsame Funkvorrichtung, und/oder eine gemeinsame Ein- und/oder Ausschaltvorrichtung aufweisen. Dadurch können eine Anzahl von Bauteilen und Baukosten reduziert werden.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: schematisiert eine Tür mit einem Außentürbeschlag und einem Innentürbeschlag,
- Fig. 2: den Außentürbeschlag und
- Fig. 3: den Innentürbeschlag.

### Beschreibung des Ausführungsbeispiels

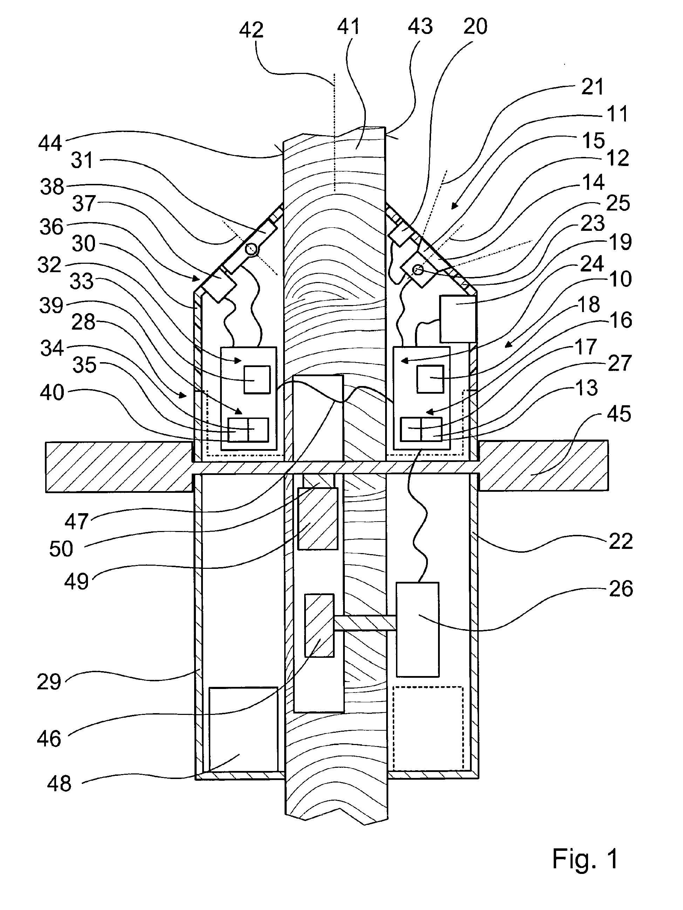

Figur 1 zeigt schematisiert eine Tür 41 mit einem ersten Türbeschlag, der an einer Außenseite 43 der Tür 41 angeordnet ist und einen Außentürbeschlag 10 bildet, und mit einem zweiten Türbeschlag, der an einer Innenseite 44 der Tür 41 angeordnet ist und einen Innentürbeschlag 28 bildet.

Der Außentürbeschlag 10 und der Innentürbeschlag 28 weisen gleich ausgestaltete Grundkörper 22, 29 auf, die als ein Strangpressprofil ausgebildet sind und in einem Strangpressverfahren hergestellt werden. Die Grundkörper 22, 29 bestehen im Wesentlichen aus Aluminium. Querschnitte der Grundkörper 22, 29 weisen ein U-förmiges Profil auf, das einen frei nutzbaren Innenraum hat. Der Außentürbeschlag 10 und der Innentürbeschlag 28 umfassen je einen Einsatz 23, 30, der einen Endbereich des jeweiligen Türbeschlags bildet und den jeweiligen Grundkörper 22, 29 nach oben abschließt.

Die sichtbaren Bauteile der Einsätze 23, 30 bestehen vorwiegend aus Plastik. Die Einsätze 23, 30 selber sind als Module, die einfach ausgetauscht werden können, ausgebildet. Alle Teile, insbesondere alle elektronischen Teile, die die Einsätze 23,30 umfassen, sind in Plastik eingegossen, um die Teile gegen Vibrationen und Feuchtigkeit zu schützen. Alternativ können die Teile auch, beispielsweise mittels eines PU-Schaums, eingeschäumt werden. Die beiden Einsätze 23, 30 weisen je eine Prozessoreinheit 24, 32 auf und stellen eine Zugangskontrollfunktion und insbesondere einen elektrischen Türspion bereit.

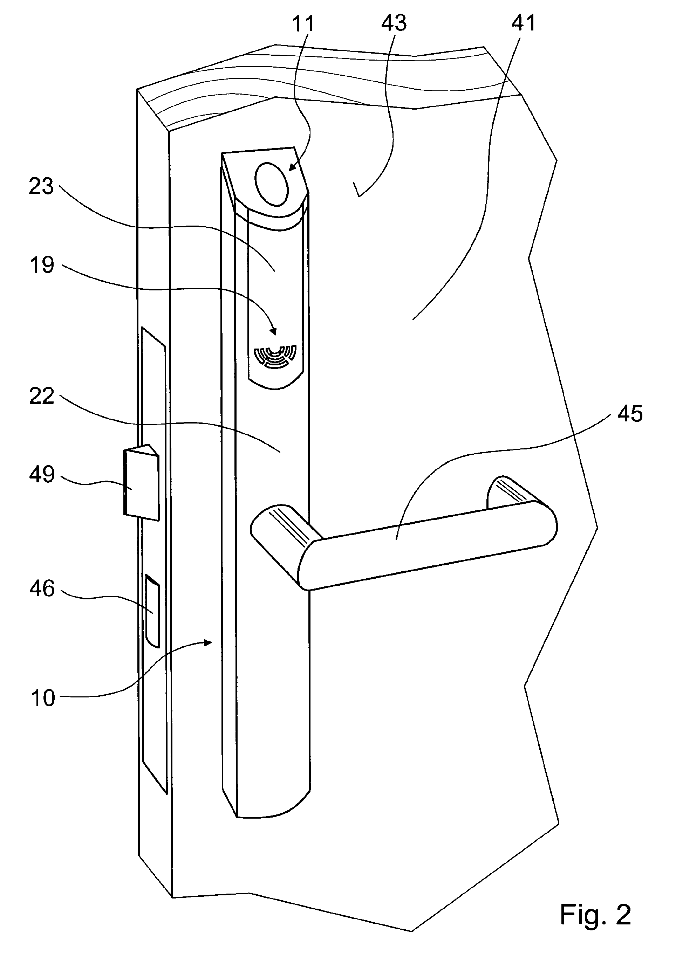

Der Einsatz 23 des Außentürbeschlags 10 weist eine Kameravorrichtung 11 auf, die als das Modul des Einsatzes 23 des Außentürbeschlags 10 ausgebildet ist (Figur 2). Die Kameravorrichtung 11 umfasst eine Einstellvorrichtung 25, die mit einer geeigneten Aktuatorik ausgestattet ist und mittels der die Kameravorrichtung 11 in einen einstellbaren Winkel zwischen 30° und 60° zu einer Haupterstreckungsrichtung 42 der Tür 41, die parallel zu einer Haupterstreckungsrichtung des Außentürbeschlags 10 verläuft, eingestellt werden kann. In einer mittleren Stellung der Einstellvorrichtung 25 schließt die Aufnahmerichtung 12 einen Winkel von 45° mit der Haupterstreckungsrichtung 42 ein. Die Kameravorrichtung 11 weist ein Weitwinkelobjektiv 14 auf, das ein Blickfeld 21 mit einem Blickwinkel von 60° aufweist. Somit kann mittels der Kameravorrichtung 11 ein Winkelbereich von 0° bis 90° zu der Haupterstreckungsrichtung 42 erfasst werden. Es können grundsätzlich aber auch Objektive mit einem anderen Blickwinkel verwendet werden. Weiter weist die Kameravorrichtung eine Zoomvorrichtung 15 auf, die teilweise einteilig mit dem Weitwinkelobjektiv 14 ausgeführt ist und mittels der neben einem optischen Zoom auch ein digitaler Zoom realisierbar ist.
Zur Übertragung von Daten, insbesondere zur Übertragung der von der Kameravorrichtung 11 aufgenommenen Daten, umfasst der Außentürbeschlag 10 eine Datenübertragungsvorrichtung 16, die einteilig mit der Prozessoreinheit 24 ausgeführt ist. Die Datenübertragungsvorrichtung 16 weist dabei eine Kommunikationsvorrichtung 27 zur kabelgebundenen Datenübertragung und eine Funkvorrichtung 17 zur drahtlosen Datenübertragung auf. Einteilig mit der Funkvorrichtung 17 ist eine Datenverschlüsselungsvorrichtung 13 ausgeführt, mittels der die über die Funkvorrichtung 17 gesendeten Daten verschlüsselt werden können, um ein Mitschneiden der übermittelten Daten zu verhindern.

Über die Funkvorrichtung 17 der Datenübertragungsvorrichtung 16 werden die Daten der Kameravorrichtung 11 an einen PC gesendet. An dem PC können die von der Kameravorrichtung 11 aufgezeichneten Daten und insbesondere die mittels der Kameravorrichtung 11 aufgezeichneten Bilder, die aus den Daten resultieren, wiedergegeben werden. Außerdem kann mittels des PCs eine Bilderkennung, wie beispielsweise eine biometrische Bilderkennung, ausgeführt werden.

Mit der Datenübertragungsvorrichtung 16 sind weiter neben der Kameravorrichtung 11 eine Ein- und Ausschaltvorrichtung 18 und eine Zugangsfreigabevorrichtung 19 verbunden. Insbesondere kann auch die Einstellvorrichtung 25 der Kameravorrichtung 11 über die Datenübertragungsvorrichtung 16 angesteuert werden.

Die Ein- und Ausschaltvorrichtung 18 aktiviert die Kameravorrichtung 11 nach einem entsprechenden Steuerungsbefehl für einen definierten Zeitraum. Sie deaktiviert die Kameravorrichtung 11 wieder, nachdem die Tür 41 geöffnet wurde oder wenn eine definierte Zeitspanne, die frei wählbar ist, verstrichen ist. Weiter wird gemeinsam mit der Kameravorrichtung 11 eine Beleuchtungsvorrichtung 20 aktiviert. Die Beleuchtungsvorrichtung 20 umfasst eine Infrarotdiode und leuchtet das Blickfeld 21 der Kameravorrichtung aus. Alternativ zu einer grundsätzlichen Aktivierung der Beleuchtungsvorrichtung 20 mit der Kameravorrichtung 11 kann die Aktivierung der Beleuchtungsvorrichtung 20 auch von weiteren Parametern, wie beispielsweise einem Lichtverhältnis, abhängen.

Die Zugangsfreigabevorrichtung 19, die ebenfalls über die Datenübertragungsvorrichtung 16 angesteuert werden kann, betätigt eine Türriegelbetätigungsvorrichtung 26, die mit einem Türriegel 46 der Tür verbunden ist und die einen Elektromotor aufweist. Weiter betätigt die Zugangsfreigabevorrichtung 19 eine Türfallenbetätigungsvorrichtung 50, die als eine Kupplungsvorrichtung ausgebildet ist, und die eine Türfalle 49 mit einem Drücker 45 verbinden kann. Die Türfallenbetätigungsvorrichtung 50 ist in diesem Ausführungsbeispiel innerhalb der Tür 41 angeordnet. Die Türfallenbetätigungsvorrichtung 50 und die Türriegelbetätigungsvorrichtung 26 können grundsätzlich auch in dem Innentürbeschlag 28 angeordnet werden, wodurch eine Sicherheit gegen eine Manipulation erhöht wird. Mittels der Türfallenbetätigungsvorrichtung 50 und der Türriegelbetätigungsvorrichtung 26 kann die Zugangsfreigabevorrichtung 19 einen Zugang zu einem Raum freigeben oder den Raum gegen einen unerlaubten Zugang verriegeln.

Durch die Anbindung an die Datenübertragungsvorrichtung 16 kann der Raum über die Zugangsfreigabevorrichtung 19 von einem von der Tür entfernt stehenden PC freigegeben werden, wie beispielsweise von einem Sekretariat, das die durch die Kameravorrichtung 11 aufgenommenen Daten übermittelt bekommt. Weiter kann die Zugangsfreigabevorrichtung 19 mittels eines elektronischen Schlüssels, der beispielsweise mittels eines RFID-Standards, eines Fingerabdrucks und/oder einer PIN-Eingabe realisierbar ist, aktiviert werden und gibt dann den Zugang zu dem Raum frei oder verriegelt den Raum. Mittels des Schlüssels kann der Zugang zu dem Raum direkt von der Tür aus freigegeben werden. Weiter ist es denkbar, über die Bilderkennung am PC eine automatisierte schlüssellose Zugangsfreigabevorrichtung zu realisieren.

Über die Kommunikationsvorrichtung 27 ist der Außentürbeschlag 10 mit dem Innentürbeschlag 28 verbunden und kann Daten mit dem Innentürbeschlag 28 austauschen.

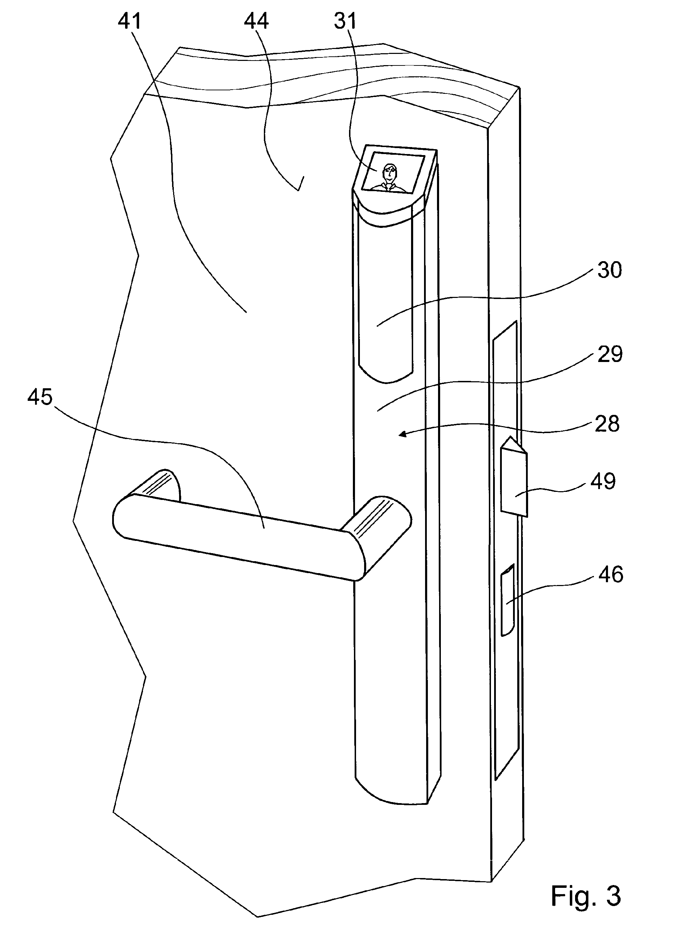

Der Innentürbeschlag 28 weist ein Display 31 auf, das als das Modul des Einsatzes 30 des Innentürbeschlags 28 ausgebildet ist (Figur 3). Das Display 31 ist oben an dem Innentürbeschlag 28 angeordnet. Das Display 31 ist als ein organisches Display ausgebildet und weist eine Normalrichtung 38 auf, die manuell durch einen Benutzer in einem Winkel von 30° bis 60° zu einer Haupterstreckungsrichtung des Innentürbeschlags 28, die parallel zu der Haupterstreckungsrichtung 42 der Tür 41 verläuft, einstellbar ist, wobei die Normalrichtung 38 in einer mittleren Stellung einen Winkel von 45° mit der Haupterstreckungsrichtung 42 einschließt.

Der Innentürbeschlag 28 weist zur Verbindung mit dem Außentürbeschlag 10 eine Datenübertragungsvorrichtung 39 mit einer Kommunikationsvorrichtung 35 auf, die über ein Kabel 47 mit der Kommunikationsvorrichtung 27 der Datenübertragungsvorrichtung 16 des Außentürbeschlags 10 verbunden ist. Über die Datenübertragungsvorrichtung 39 empfangene Daten, insbesondere die Daten der Kameravorrichtung 11 des Außentürbeschlags 10, werden vorzugsweise an das Display 31 weitergeleitet, wodurch auf dem Display 31 ein Bild einer vor der Tür 41 stehenden Person angezeigt werden kann. Weiter umfasst die Datenübertragungsvorrichtung 39 eine Funkvorrichtung 34 mit einer Datenverschlüsselungsvorrichtung 40, über die weitere Daten, wie beispielsweise Informationen für einen Hotelgast, empfangen und an das Display 31 weitergeleitet werden können.

Das Display 31 wird über eine Ein- und Ausschaltvorrichtung 33 des Innentürbeschlags 28 aktiviert. Die Ein- und Ausschaltvorrichtung 33 ist mit einer Schaltervorrichtung 36, die einen Drucktaster 37 umfasst, verbunden. Das Display 31 kann durch einen Druck auf den Drucktaster 37 aktiviert werden. Deaktiviert wird das Display 31 automatisch nach dem Öffnen der Tür 41 bzw. nach einer definierten Zeitspanne oder durch einen erneuten Druck auf den Drucktaster 37. Alternativ zu der gezeigten Ausführung, bei dem der Drucktaster 37 neben dem Display 31 angeordnet ist, kann die Schaltervorrichtung 36 zumindest teilweise in Einheit mit dem Drücker 45 ausgeführt werden, wodurch eine Betätigung eines Drückers 45, wie beispielsweise ein Antippen, sensiert und das Display 31 aktiviert werden kann.

Die Ein- und Ausschaltvorrichtung 33 des Innentürbeschlags 28 ist mit der Datenübertragungsvorrichtung 39 verbunden. Wird das Display 31 über die Schaltervorrichtung 36 aktiviert, werden gleichzeitig die Kameravorrichtung 11 und die Beleuchtungsvorrichtung 20 an dem Außentürbeschlag 10 aktiviert und die Daten der Kameravorrichtung 11 werden nach innen an das Display 31 übermittelt. Dadurch bilden der Außentürbeschlag 10 und der Innentürbeschlag 28 in Einheit einen elektronischen Türspion.

Um Kosten und Bauteile zu reduzieren, können der Innentürbeschlag 28 und der Außentürbeschlag 10 zumindest teilweise einteilig ausgeführt werden. Vorzugsweise werden Einheiten oder Bauteile, die in dem Innentürbeschlag 28 und dem Außentürbeschlag 10 eine vergleichbare Funktion erfüllen, nur in einem der Türbeschläge 10, 28 ausgeführt, und der andere Türbeschlag 28, 10 wird über das Kabel 47 an diese Einheit angeschlossen.

So ist es beispielsweise vorteilhaft, die beiden Ein- und Ausschaltvorrichtungen 18, 33 in eine Einheit zusammenzufassen, die eine Ein- und Ausschaltfunktion sowohl für den Innentürbeschlag 28 als auch für den Außentürbeschlag 10 bereitstellt. Weiter können die beiden Datenübertragungsvorrichtungen 16, 39 zumindest teilweise zu einer Vorrichtung für beide Türbeschläge 10, 28 zusammengefasst werden, wobei insbesondere eine gemeinsame Funkvorrichtung und eine gemeinsame Datenverschlüsselungsvorrichtung für beide Türbeschläge 10, 28 vorteilhaft ist.

Einteilig für den Innentürbeschlag 28 und den Außentürbeschlag 10 ausgeführt ist eine Energieversorgungseinheit 48, die in dem Innentürbeschlag 28 angeordnet ist. Der Außentürbeschlag 10 ist über das Kabel 47 an die Energieversorgungseinheit 48 angebunden. Die Energieversorgungseinheit 48 ist mittels einer Batterie- oder Akkueinheit ausgeführt, um eine unabhängige Energieversorgung zu erreichen. Alternativ ist auch eine Energieversorgung von außerhalb der Türbeschläge denkbar, wie beispielsweise eine Energieversorgung über ein Stromnetz eines Gebäudes oder, besonders vorteilhaft, über eine in die Tür integrierte Stromerzeugung, die beispielsweise eine Bewegungsenergie durch ein Öffnen und Schließen der Tür 41 in eine elektrische Energie umwandelt und diese einem Energiespeicher der Energieversorgungseinheit 48 zuführt.

### Bezugszeichen

- 10: Außentürbeschlag
- 11: Kameravorrichtung
- 12: Aufnahmerichtung
- 13: Datenverschlüsselungsvorrichtung
- 14: Weitwinkelobjektiv
- 15: Zoomvorrichtung
- 16: Datenübertragungsvorrichtung
- 17: Funkvorrichtung
- 18: Ein- und/oder Ausschaltvorrichtung
- 19: Zugangsfreigabevorrichtung
- 20: Beleuchtungsvorrichtung
- 21: Blickfeld
- 22: Grundkörper
- 23: Einsatz
- 24: Prozessoreinheit
- 25: Einstellvorrichtung
- 26: Türriegelbetätigungsvorrichtung
- 27: Kommunikationsvorrichtung
- 28: Innentürbeschlag
- 29: Grundkörper
- 30: Einsatz
- 31: Display
- 32: Prozessoreinheit
- 33: Ein- und/oder Ausschaltvorrichtung
- 34: Funkvorrichtung
- 35: Kommunikationsvorrichtung
- 36: Schaltervorrichtung
- 37: Drucktaster
- 38: Normalrichtung
- 39: Datenübertragungsvorrichtung
- 40: Datenverschlüsselungsvorrichtung
- 41: Tür
- 42: Haupterstreckungsrichtung
- 43: Außenseite
- 44: Innenseite
- 45: Drücker
- 46: Türriegel
- 47: Kabel
- 48: Energieversorgungseinheit
- 49: Türfalle
- 50: Türfallenbetätigungsvorrichtung

## Patentansprüche

1. Türbeschlag, insbesondere für eine Außenseite (43) einer Tür (41),
**gekennzeichnet durch**
eine Kameravorrichtung (11).

2. Türbeschlag nach Anspruch 1,
**dadurch gekennzeichnet, dass**
die Kameravorrichtung (11) als ein Modul ausgebildet ist.

3. Türbeschlag nach Anspruch 1 oder 2,
**dadurch gekennzeichnet, dass**
die Kameravorrichtung (11) eine Aufnahmerichtung (12) aufweist, die mit einer Haupterstreckungsrichtung einen Winkel zwischen 30° und 60° einschließt.

4. Türbeschlag nach einem der vorhergehenden Ansprüche,
**dadurch gekennzeichnet, dass**
die Kameravorrichtung (11) ein Weitwinkelobjektiv (14) aufweist.

5. Türbeschlag nach einem der vorhergehenden Ansprüche,
**dadurch gekennzeichnet, dass**
die Kameravorrichtung (11) eine Zoomvorrichtung (15) aufweist.

6. Türbeschlag nach einem der vorhergehenden Ansprüche,
**gekennzeichnet durch**
eine Datenübertragungsvorrichtung (16), die dazu vorgesehen ist, Daten der Kameravorrichtung (11) weiterzuleiten.

7. Türbeschlag nach Anspruch 6,
**dadurch gekennzeichnet, dass**
die Datenübertragungsvorrichtung (16) eine Funkvorrichtung (17) umfasst, die dazu vorgesehen ist, die Daten drahtlos zu übermitteln.

8. Türbeschlag nach einem der vorhergehenden Ansprüche,
**gekennzeichnet durch**
eine Ein- und/oder Ausschaltvorrichtung (18), die dazu vorgesehen ist, die Kameravorrichtung (11) zu aktivieren.

9. Türbeschlag nach einem der vorhergehenden Ansprüche,
**gekennzeichnet durch**
eine Zugangsfreigabevorrichtung (19), die dazu vorgesehen ist, einen Zugang zu einem Raum freizugeben.

10. Türbeschlag nach einem der vorhergehenden Ansprüche,
**gekennzeichnet durch**
eine Beleuchtungsvorrichtung (20), die dazu vorgesehen ist, ein Blickfeld (21) der Kameravorrichtung (11) auszuleuchten.

11. Türbeschlag, insbesondere für eine Innenseite (44) einer Tür (41) und insbesondere in Verbindung mit einem Türbeschlag nach einem der vorhergehenden Ansprüche,
**gekennzeichnet durch**
ein Display (31).

12. Türbeschlag nach Anspruch 11,
**dadurch gekennzeichnet, dass**
das Display (31) als ein Modul ausgebildet ist.

13. Türbeschlag zumindest nach Anspruch 11,
**dadurch gekennzeichnet, dass**
das Display (31) als ein organisches Display ausgebildet ist.

14. Türbeschlag zumindest nach Anspruch 11,
**dadurch gekennzeichnet, dass**
das Display (31) eine Normalrichtung (38) aufweist, die mit einer Haupterstreckungsrichtung einen Winkel zwischen 30° und 60° einschließt.

15. Türbeschlag zumindest nach Anspruch 11,
**gekennzeichnet durch**
eine Datenübertragungsvorrichtung (39), die dazu vorgesehen ist, empfangene Daten an das Display (31) weiterzuleiten.

16. Türbeschlag zumindest nach Anspruch 11,
**gekennzeichnet durch,**
eine Ein- und/oder Ausschaltvorrichtung (33), die dazu vorgesehen ist, das Display (31) zu aktivieren.

17. Verfahren für einen Türbeschlag, insbesondere einen Türbeschlag zumindest nach einem der Ansprüche 1 bis 11,
**dadurch gekennzeichnet, dass**
Daten einer Kameravorrichtung (11) des Türbeschlags mittels einer Datenübertragungsvorrichtung (16) an einen PC übermittelt werden.

18. Verfahren nach Anspruch 17,
**dadurch gekennzeichnet, dass**
die Daten mittels dem PC ausgewertet werden.

19. Verfahren zumindest nach Anspruch 17,
**dadurch gekennzeichnet, dass**
die Daten und/oder daraus zumindest teilweise resultierende Daten mittels dem PC angezeigt werden.

20. Verfahren zumindest nach Anspruch 17 und insbesondere nach Anspruch 19,
**dadurch gekennzeichnet, dass**
über den PC wenigstens ein Element des Türbeschlags angesteuert wird.

21. Verfahren nach Anspruch 20,
**dadurch gekennzeichnet, dass**
über den PC eine Zugangsfreigabevorrichtung (19) angesteuert wird.
